# EUROPEAN PATENT APPLICATION

(11) **EP 1 655 988 A2**
(43) Date of publication of application: **10.05.2006**
(21) Application number: 05023788.2
(22) Date of filing: 31.10.2005
(51) Int. Cl.: H04Q 11/00

(54) **Optical switch**

(30) Priority: 02.11.2004 JP 2004319957
(71) Applicant: FUJITSU LIMITED, Kawasaki-shi, Kanagawa 211-8588 (JP)
(72) Inventor: Terahara, Takafumi, -ku Kawasaki-shi Kanagawa 211-8588 (JP); Rasmussen, Jens C., -ku Kawasaki-shi Kanagawa 211-8588 (JP); Ooi, Hiroki, -ku Kawasaki-shi Kanagawa 211-8588 (JP); Miura, Akira, -ku Kawasaki-shi Kanagawa 211-8588 (JP)
(74) Representative: HOFFMANN EITLE

(57) **Abstract**

The optical switch includes: an input port from which a beam is input; a dispersing unit that disperses the beam input; a condensing unit that condenses the beam dispersed; a mirror that reflects the beam condensed; and a plurality of output ports from which the beam reflected is output. The mirror rotates around a first axis so that the beam reflected enters one of the output ports, and also rotates around a second axis perpendicular to the first axis so that an intensity of the beam output is attenuated.

## Description

### CROSS-REFERENCE TO RELATED APPLICATIONS

This application is based upon and claims the benefit of priority from the prior Japanese Patent Application No.2004-319957, filed on November 2, 2004, the entire contents of which are incorporated herein by reference.

### BACKGROUND OF THE INVENTION

### 1) Field of the Invention

The present invention relates to an optical switch that switches an output port and adjusts intensity of output light by the angle of an mirror that reflects input light.

### 2) Description of the Related Art

Conventionally, channel switching in an optical transmission apparatus is performed through electrical switching after conversion from an optical signal to an electrical signal. However, by using a Wavelength-Selective Switch (WSS) for direct switching of an optical signal, a switching speed and efficiency can be improved.

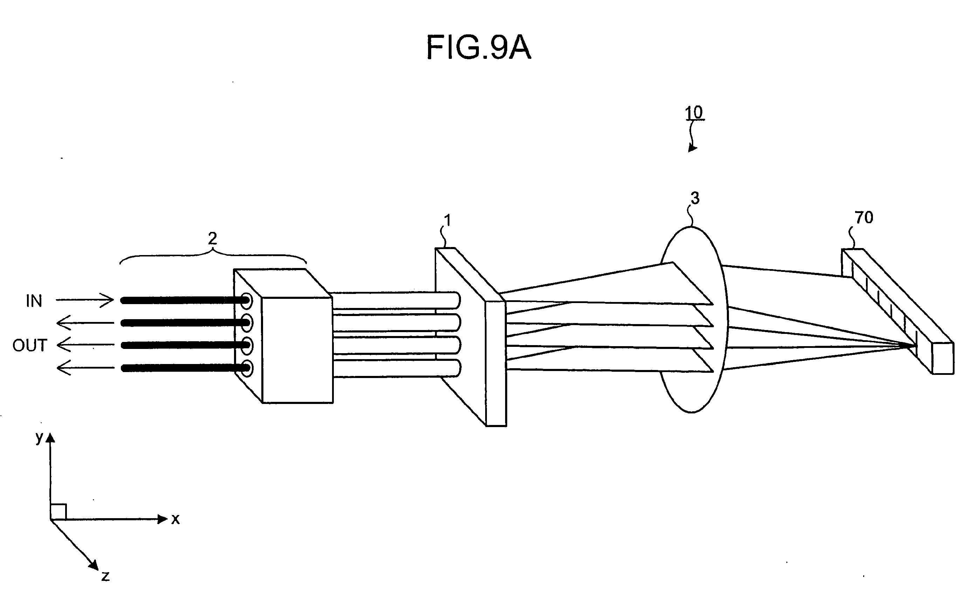

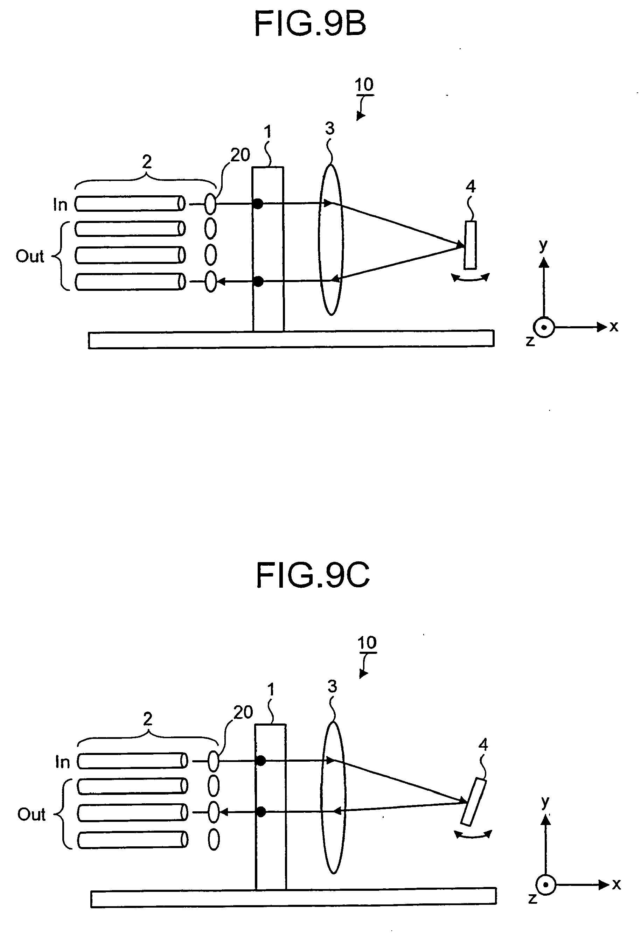

Fig. 9A is a perspective view of the structure of a wavelength-selective switch, and Fig. 9B is a side view of the structure of the wavelength-selective switch. A wavelength-selective switch 10 includes a spectroscopic element 1 for spectroscopic dispersion of a wavelength-multiplexed optical signal, an input and output optical system (an input optical system and an output optical system) 2 having input and output ports or the like, a beam-condensing optical system 3, and a movable reflector array (mirror array) 70 which is an array of movable reflectors disposed for respective wavelengths. The spectroscopic element 1 shown in the drawing is exemplarily implemented by a transmission-type diffraction grating. The spectroscopic element 1 outputs an input wavelength-division-multiplexing (WDM) light so that the light is dispersed in a different direction (in a Z axis direction in the drawing) for each wavelength. The lights dispersed are spread on a Y-Z plane in the drawing. The movable reflector array 70 is provided with a plurality of movable reflectors 4 (micromirrors or MEMS mirrors, not shown) for respective channels along a wavelength dispersion direction (in a horizontal direction in the drawing).

Fig. 9C is a side view of a port switching operation of the wavelength-selective switch. As shown in Fig. 9C, the angle of the movable reflector 4 is changed along a port arrangement direction (Y axis direction in the drawing), thereby allowing the light input from the input port (IN) to enter any one of the output ports (OUT) for each channel (for example, refer to Published Japanese Translations of PCT International Publication for Patent Applications No. 2003-515187).

The optical system can differ depending on the type of the wavelength-selective switch, and the positional relation among the components is not necessarily identical to that shown in Fig. 9A. For example, a coordinate system shown in Fig. 9A can be changed by adopting a reflecting mirror or a reflection-type spectroscopic optical system for reflecting a light beam. However, in any type of the wavelength-selective switch, its basic principle can be described with Fig. 9A. Therefore, in the following description, the coordinate system shown in Fig. 9A is used.

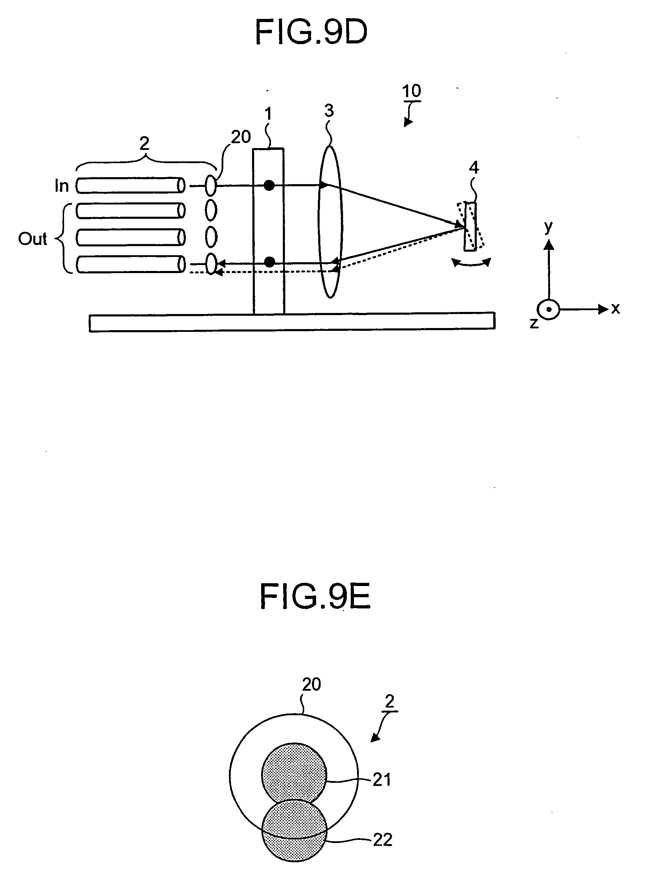

By changing the angle of the movable reflector 4, in addition to switching among the output ports, the intensity of the output light can be arbitrarily attenuated for each channel. With such attenuation, an improvement in intensity balance of the output WDM light can be realized. Fig. 9D is a side view for explaining the principle of attenuation of the output light. As shown in a solid line of Fig. 9D, the attenuation amount is at minimum when the output light beam is coupled to a collimate lens 20 in the input and output optical system 2 without an axial displacement. When the angle of the movable reflector 4 is changed from the above state, as shown in a dotted line, an axial displacement occurs between the output light beam and the collimate lens 20. The light intensity of the output light is attenuated on the basis of the amount of axial displacement.

Fig. 9E is a drawing of positions where the reflected light beam from the movable reflector is input to the collimate lens. If no axial displacement occurs between the reflected light beam from the movable reflector 4 and the collimate lens 20 in the input and output optical system 2, the input position is as shown by a reflected light beam 21. On the other hand, when an axial displacement occurs as a result of deviation of coupling with the collimate lens 20, the input position of attenuated light beam is as shown by a reflected light beam 22. Such an axial deviation can occur when the angle of the movable reflector 4 is changed not only in the Y axis direction (port switching direction) as shown in Fig. 9D but also in the Z axis direction (spectroscopic direction). In the following, as appropriate, for the direction of moving the reflected light beam 21, the Z axis direction (spectroscopic direction) is referred to as a horizontal direction, and the Y axis direction (port switching direction) is referred to as a vertical direction.

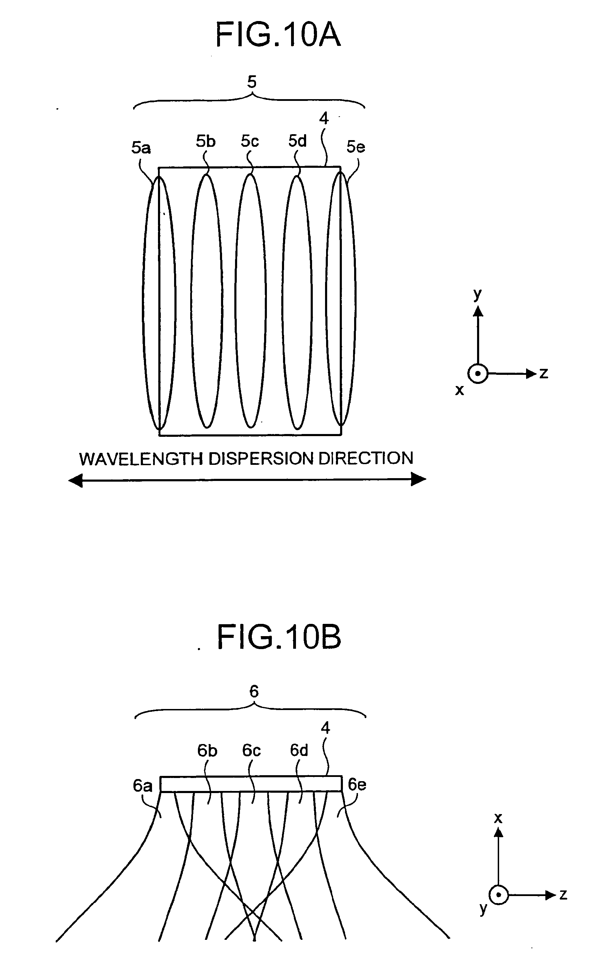

In such a wavelength-selective switch, a difference in wavelength of the incident light beam corresponds to a difference in position on the movable reflector array 70. Fig. 10A is a drawing of incident positions on the movable reflector. The incident light beam is dispersed in the horizontal direction (Z axis direction) for each wavelength within one channel to become incident light beams 5 (5a to 5e), which are input to the movable reflector 4. That is, depending on the difference in wavelength of the incident light beams input to the movable reflector 4, the incident position is changed from near the center of the movable reflector 4 (incident light beam 5c) to the end faces of the movable reflector 4 (incident light beams 5a, 5e).

Fig. 10B is a drawing of reflected light beams on the movable reflector. Reflected light beams 6 are light beams of the incident light beams 5 reflected after being incident to the movable' reflector 4. As for the reflected light beams 6 (6a, 6e) from near the end faces of the movable reflector 4, the incident light beams 5 (5a, 5e) are cut with the end faces. Therefore, when these reflected light beams reach the input and output optical system 2, their spot diameter is expanded due to diffraction at positions away from the movable reflector 4, compared from that of the reflected light beams 6 (6b to 6d) from near the center of the movable reflector 4.

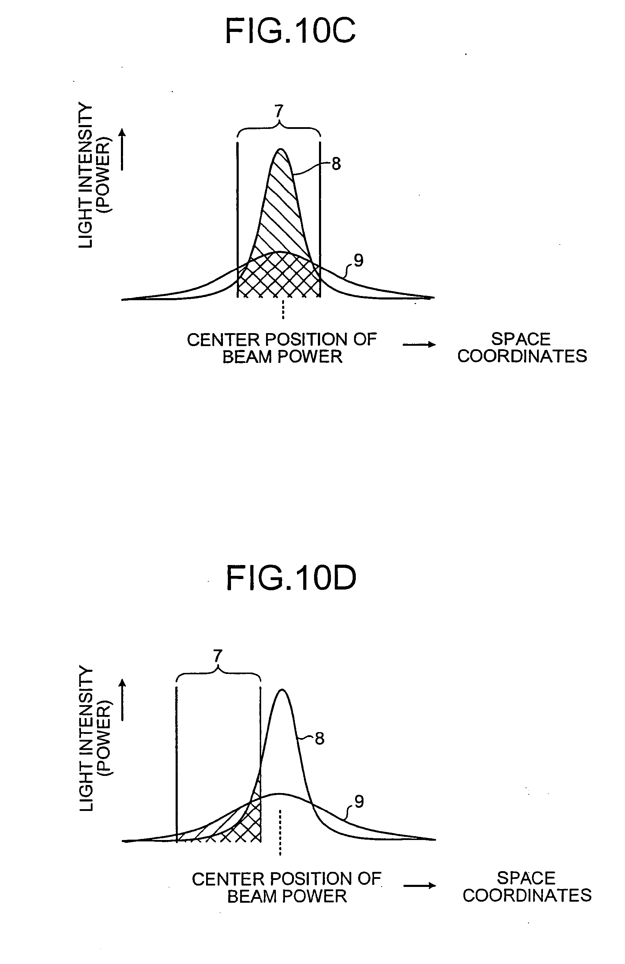

Fig. 10C is a drawing for explaining power distribution of reflected light beams when transmission light power is at maximum. Fig. 10D is a drawing for explaining power distribution of reflected light beams when transmission light power is attenuated. A region 7 corresponds to an opening to the input and output optical system 2 mainly represented by the collimate lens 20, and approximately corresponds to an area of the collimate lens 20 shown in Fig. 9D. A curve 8 shown in Figs. 10C and 10D represents a beam power of the reflected light beams 6 (6b to 6d) from near the center of the movable reflector 4, and a curve 9 represents a beam power of the reflected light beams 6 (6a, 6e) from near the end faces of the movable reflector 4. The movable reflector 4 is set so that the center wavelength of each channel is located at the center.

Due to the influence of expansion of the beam spot diameter caused by diffraction, the curve 9 corresponding to the reflected light beams 6 (6a, 6e) from near the end faces is spatially spread more than the curve 8 corresponding to the reflected light beams 6 (6b to 6d) from near the center. In practice, the light intensity of the output light input to the input and output optical system 2 is represented by the area defined by the curves 8 or 9 in the region 7. When attention is given to a relation between the region 7 and each curve, that is, a relation between the opening position corresponding to the region 7 and the beam power of the reflected light beam from the movable reflector 4, in Fig. 10C that depicts the state where the transmission light power is at maximum, the peaks of the curves 8 and 9 are both included in the region 7, and the ratio of an area of the curve 8 in the region 7 to the entire beam power is not so different from that of the curve 9.

On the other hand, in Fig. 10D that depicts the state where the transmission light power is attenuated, since the curve 9 is spread more compared with the curve 8, the ratio of the area of the curve 8 in the region 7 to the entire beam power is different from that of the curve 9, thereby causing the reflected light beams 6 (6a, 6e) from near the end faces to have a large influence.

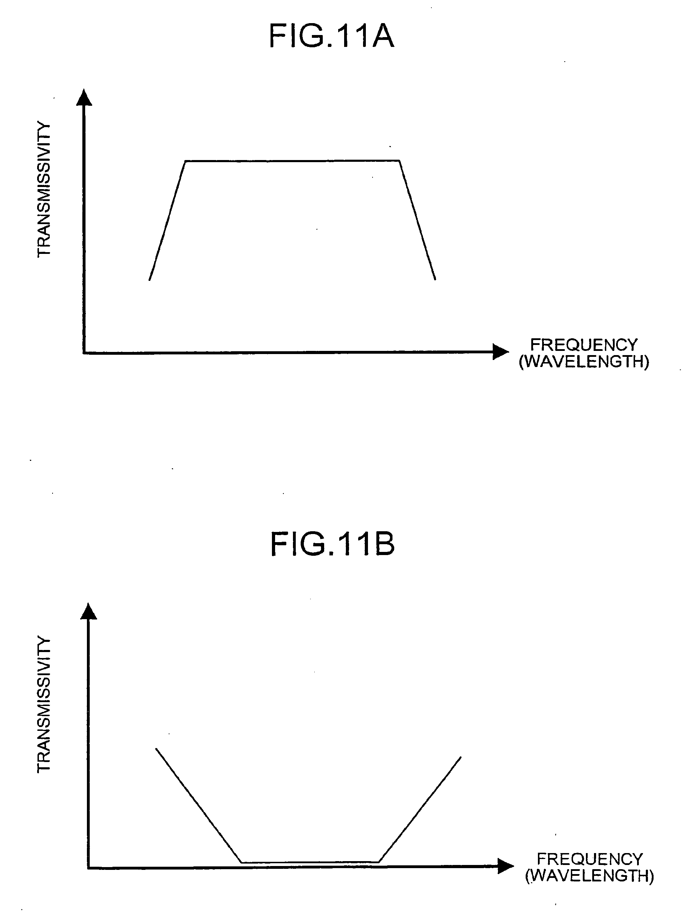

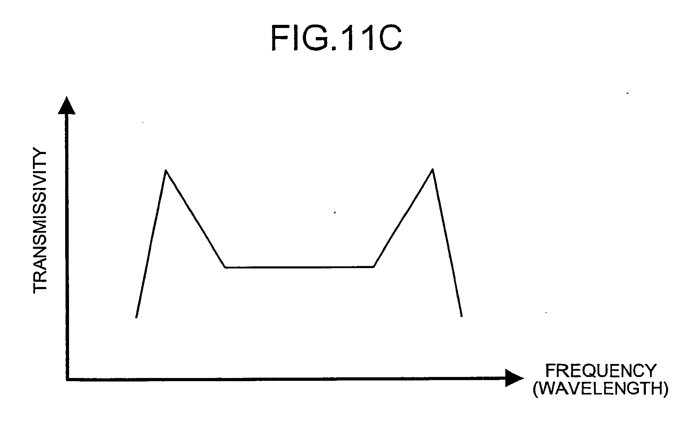

Fig. 11A is a drawing that depicts a relation between a wavelength and a transmittance without an influence of diffraction. Fig. 11 B is a drawing that depicts a relation between a wavelength and a transmittance with an influence of diffraction. Fig. 11C is a drawing that depicts a relation between a wavelength and a transmittance in consideration of an influence of diffraction. In the drawings, the horizontal axis represents a frequency (wavelength), and the vertical axis represents a transmittance.

In the case without influence of diffraction, only a change in beam power caused by the cutting of the reflected light beams 6 has an influence. Therefore, as shown in Fig. 11A, a transmissivity-to-band characteristic is represented by trapezoidal shape. On the other hand, as the reflected light beams 6 are closer to the end faces of the movable reflector 4, the amount of cutting of these reflected light beams is increased, and thus the influence of diffraction tends to be increased. Therefore, with the influence of diffraction, a transmissivity-to-band characteristic represented by an inverted trapezoidal shape as shown in Fig. 11 B is added.

Thus, a transmissivity-to-band characteristic with the characteristic shown in Fig. 11A in consideration of the influence shown in Fig. 11 B is represented by an approximately M shape as shown in Fig. 11C, in which the transmissivity is increased at the band ends (both ends) of a certain wavelength. A transmissivity-to-band characteristic is represented by such a shape when the angle of the movable reflector 4 is changed to the horizontal direction (Z axis direction) and the vertical direction (Y axis direction). However, the degree of the influence is different depending on the changing direction of the angle of the movable reflector 4. The influence is smaller when a change is made with respect to a direction of arrangement of the input and output ports (vertical direction shown in Figs. 9A to 9D, in other words, Y axis direction).

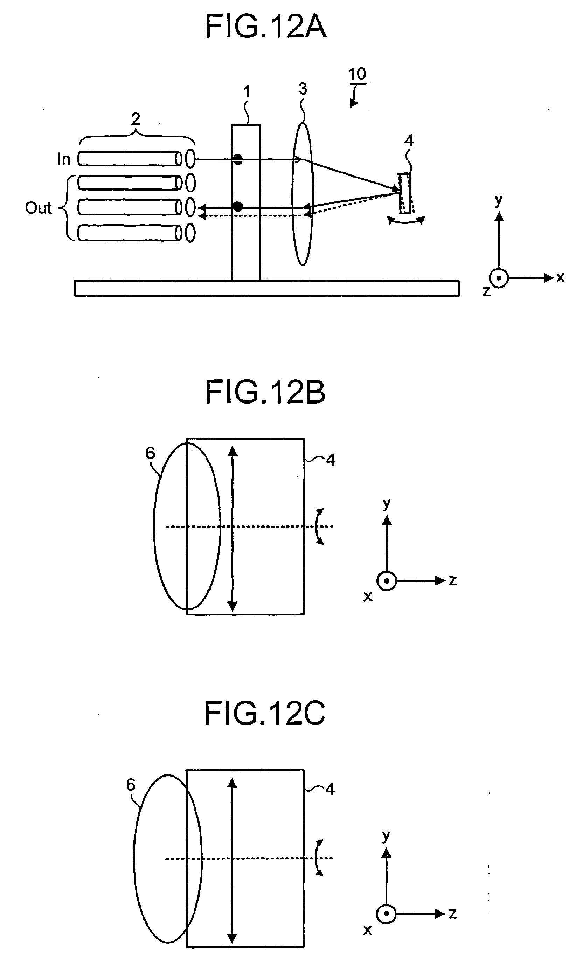

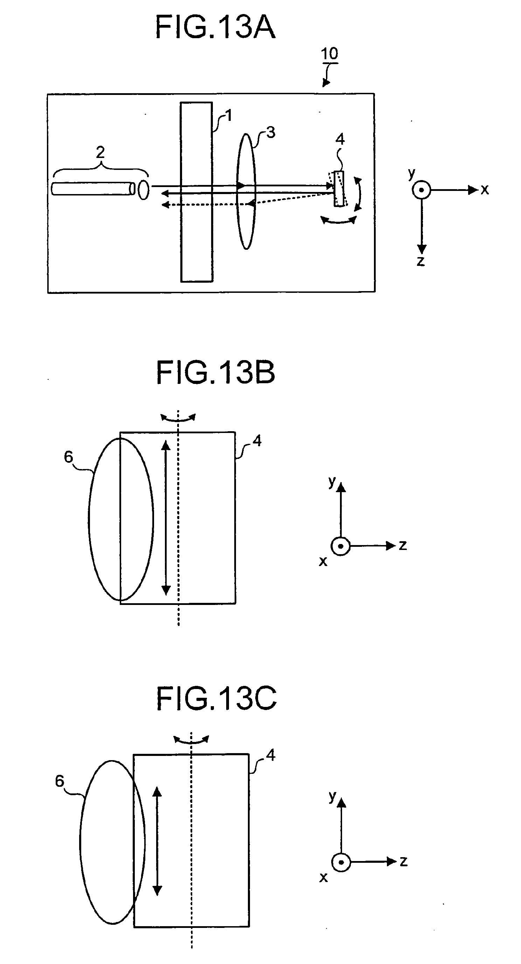

Fig. 12A is a side view of a wavelength-selective switch. Figs. 12B and 12C are front views of the movable reflector. With these Figs. 12A to 12C, the beam power when the angle of the movable reflector 4 is changed to the vertical direction is described. Fig. 13A is a top face view of the wavelength-selective switch. Figs. 13B and 13C are front views of the movable reflector. With these Figs. 13A to 13C, the beam power when the angle of the movable reflector 4 is changed to the horizontal direction is described. A dotted line shown in each of Figs. 12B, 12C, 13B, and 13C represents an axial line for changing the angle of the movable reflector 4.

As shown in Figs. 12A to 12C, when the reflected light beam 6 is moved in the vertical direction, as for a portion cut from the reflected light beams 6, an influence of diffraction occurs after the center line of the reflected light beams 6 in the vertical direction. That is, until 1/2 of the beam power, the spot diameter is little changed in the vertical direction, and also the expanded angle of the beams is little increased. At the position as shown in Fig. 12C where the expanded angle of the beams is increased, the beam power itself has already been decreased, and therefore the influence of diffraction at the end faces of the movable reflector 4 is small.

On the other hand, as shown in Figs. 13A to 13C, when the reflected light beams 6 are moved in the horizontal direction, the reflected light beams 6 are cut out and, simultaneously, an influence of diffraction occurs. That is, as the beam power is changed, the spot diameter in the horizontal direction is decreased, thereby increasing the expanded angle of the beams and the influence of diffraction.

Furthermore, when the incident light beams 5 has an elliptical shape with its major axis being taken in the vertical direction and its minor axis being taken in the horizontal axis on the movable reflector 4 for achieving wideband, the influence of diffraction is small because the spot diameter in the vertical direction is inherently large, and the degree of difference compared with the horizontal direction is further significant.

As such, only in view of the influence of diffraction, it is desirable to change the angle in the vertical direction. However, a problem occurs such that output light is leaked to another output port included in an adjacent input and output optical system 2, thereby causing a crosstalk.

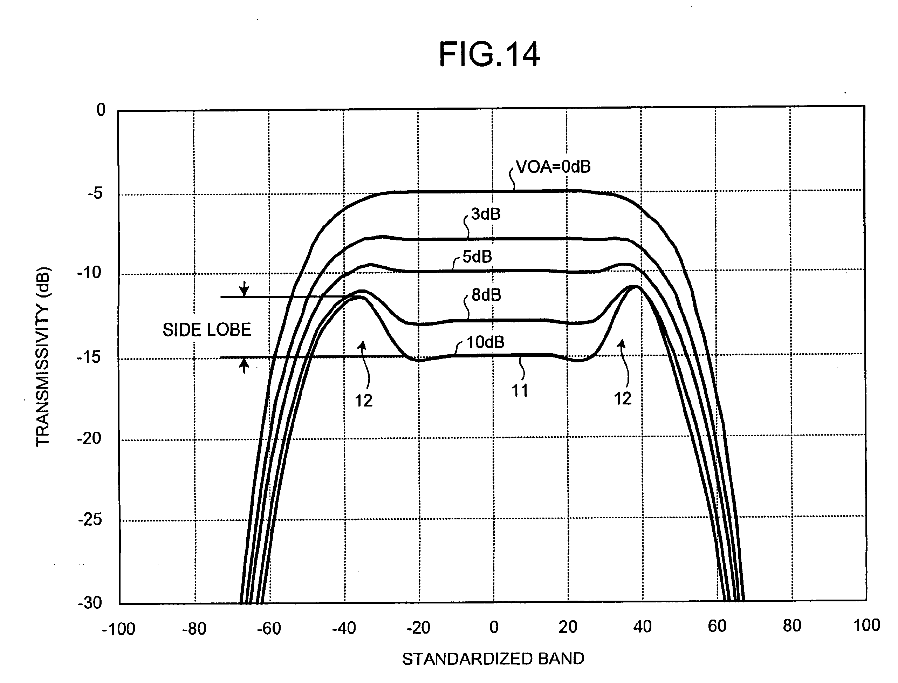

Fig. 14 is a graph that depicts an exemplary calculation of band characteristics with the angle being changed in a horizontal direction (spectroscopic direction). In the graph, the horizontal axis represents a wavelength, and the vertical axis represents an amount of attenuation (dB) of an output including an insertion loss with respect to an input. Variable Optical Attenuation (VOA) in the graph represents an attenuation amount of the reflected light beam 6 when the angle of the movable reflector 4 is changed.

When no attenuation is present (VOA=0dB), no influence of diffraction is present, and therefore the attenuation characteristic is represented by a trapezoidal shape having a flat band characteristic. As the attenuation increases, an influence of diffraction occurs. Then, as shown in Fig. 11C, the light intensity of the output light is increased in an approximately M shape at the ends of the band, thereby causing side lobes. For example, when VOA=10dB shown in Fig. 14, side lobes 12 are increased more than a flat portion by approximately 3dB.

In the optical transmission system, an optical amplifier is disposed for each node to compensate an optical loss due to a transmission path fiber. When amplification is performed by the optical amplifier, Amplified Spontaneous Emission (ASE: white noise) occurs in signal light, due to accumulation of natural emission light. In the case of the attenuation characteristic as VOA=0 (dB), the signal light is allowed to passing and therefore the ASE are nearly deleted. However, when the side lobes 12 occur as VOA=3, 5, 8, or 10 (dB), the band (approximately 10GHz) of the signal light centering at ±0 on the horizontal axis is more attenuated, thereby causing a problem such that the ASE is allowed to pass more than the signal light.

In such a transmissivity-to-band characteristic, the portion of the side lobes 12, in which the ASE (white noise) occurring with an optical amplifier being connected to the wavelength-selectable switch 10 is present, has a higher transmittance than that of a flat portion 11, in which the reflected light beams 6 are present. This causes a problem such that, for example, when the wavelength-selectable switches 10 are connected in a multi-stage manner, the intensity of the ASE is larger than that of the signal light.

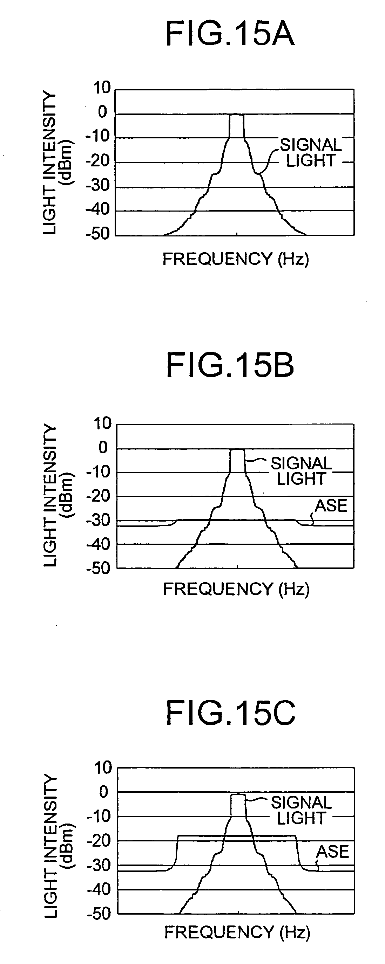

Figs. 15A to 15G are drawings that each depicts calculation results for transmission light. The horizontal axis represents a frequency (wavelength), and the vertical axis represents a light intensity (dBm). For the signal light as shown in Fig. 14, calculation is performed for each change of a difference in transmissivity between the side-lobe portion and the flat portion (hereinafter, a "side lobe") and for each change of the number of connected nodes (including a wavelength-selective switch and an optical amplifier).

First, Fig. 15A is a drawing of light intensities of the signal light and the ASE for each connection node with the side lobe=0 (dB), that is, when no side lobe is present at all. Fig. 15B depicts the state after the light passes through one node, and Fig. 15C depicts light intensities of the signal light and the ASE after the light passes through sixteen nodes. As shown in the drawings, as the number of node stages is increased, the ASE is increased. However, the signal light passes approximately without being attenuated.

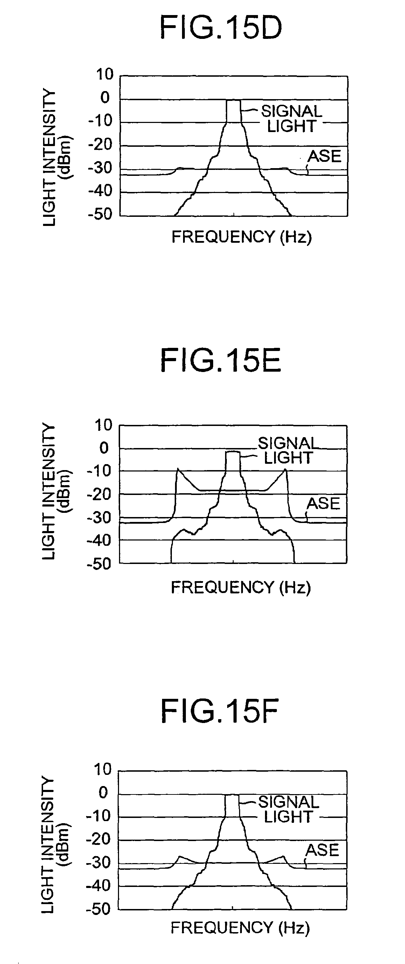

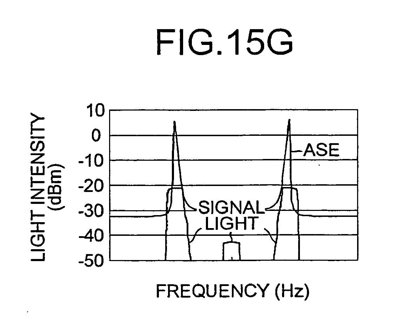

Next, the light intensity of the signal light and the ASE for each connection node with the side lobe=1 (dB) are shown in Fig. 15D that depicts the state after the light passes one node and Fig. 15E that depicts the light intensity of the signal light and the ASE after the light passes through sixteen nodes. Finally, the light intensity of the signal light and the ASE for each connection node with the side lobe=5 (dB) are shown in Fig. 15F that depicts the state after the light passes one node and Fig. 15G that depicts the light intensity of the signal light and the ASE after the light passes through sixteen nodes. As shown in the drawings, when a side lobe occurs in the node, the signal light is attenuated after multi-stage connection, and also the ASE is allowed to pass. Therefore, a reversal of the light intensity takes place, thereby causing the node not to function as a wavelength-selective switch. Therefore, conventionally, the number of multistage connections is limited, and a highly-flexible system structure cannot be constructed.

### SUMMARY OF THE INVENTION

It is an object of the present invention to at least solve the problems in the conventional technology.

An optical switch according to an aspect of the present invention includes an input port from which beam is input; a dispersing unit that disperses the beam input; a condensing unit that condenses the beam dispersed; a mirror that reflects the beam condensed; and a plurality of output ports from which the beam reflected is output. The mirror rotates around a first axis so that the beam reflected enters one of the output ports, and also rotates around an axis that is selected, according to that which output port the beam reflected enters, from any one of the first axis and a second axis perpendicular to the first axis so that an intensity of the beam output is attenuated.

An optical switch according to another aspect of the present invention includes a plurality of input ports from which beam is input; a dispersing unit that disperses the beam input; a condensing unit that condenses the beam dispersed; a mirror that reflects the beam condensed; and an output port from which the beam reflected is output. The mirror rotates around a first axis so that the beam reflected enters the output port, and also rotates around an axis that is selected, according to that from which input port the beam is input, from any one of the first axis and a second axis perpendicular to the first axis so that an intensity of the beam output is attenuated.

An optical transmission apparatus according to still another aspect of the present invention branches beam input from a transmission path and includes an input port from which the beam is input; a dispersing unit that disperses the beam input; a condensing unit that condenses the beam dispersed; a mirror that reflects the beam condensed; and a plurality of output ports from which the beam reflected is output. The mirror rotates around a first axis so that the beam reflected enters one of the output ports, and also rotates around an axis that is selected, according to that which output port the beam reflected enters, from any one of the first axis and a second axis perpendicular to the first axis so that an intensity of the beam output is attenuated.

An optical transmission apparatus according to still another aspect of the present invention adds beam to another beam going through a transmission path and includes a plurality of input ports from which the beam is input; a dispersing unit that disperses the beam input; a condensing unit that condenses the beam dispersed; a mirror that reflects the beam condensed; and an output port from which the beam reflected is output. The mirror rotates around a first axis so that the beam reflected enters the output port, and also rotates around an axis that is selected, according to that from which input port the beam is input, from any one of the first axis and a second axis perpendicular to the first axis so that an intensity of the beam output is attenuated.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1A is a side view of the structure of a wavelength-selective switch (WSS-1) according to a first embodiment performing port switching;
Fig. 1B is a side view of the structure of the wavelength-selective switch (WSS-1) according to the first embodiment performing a VOA function;
Fig. 1C is a top face view of the structure of the wavelength-selective switch (WSS-1) according to the first embodiment performing the VOA function;
Fig. 1D is a side view of a wavelength-selective switch (WSS-2) according to the first embodiment performing an operation (connection B);
Fig. 1E is a side view of the wavelength-selective switch (WSS-2) according to the first embodiment performing an operation (connection A);
Fig. 1F is a side view of the wavelength-selective switch (WSS-2) according to the first embodiment performing an operation (connections A and B);
Fig. 2A is a drawing that depicts an example of usage of the wavelength-selective switch according to the first embodiment in an optical transmission system;
Fig. 2B is a drawing of an internal structure of each OADM node;
Fig. 3A is a side view of the structure and operation of a wavelength-selective switch (WSS-1) according to a second embodiment;
Fig. 3B is a top face view of the structure and operation of a wavelength-selective switch (WSS-1) according to a second embodiment;
Fig. 3C is a side view of the structure and operation of a wavelength-selective switch (WSS-2) according to a second embodiment;
Fig. 3D is a top face view of the structure and operation of a wavelength-selective switch (WSS-2) according to a second embodiment;
Fig. 4A is a drawing that depicts an example of usage of the wavelength-selective switch according to the second embodiment in an optical transmission system;
Fig. 4B is a drawing of an internal structure of each OADM node;
Fig. 5A is a side view of the structure and operation of a wavelength-selective switch (WSS-1) according to a third embodiment;
Fig. 5B is a top face view of the structure and operation of a wavelength-selective switch (WSS-1) according to a third embodiment;
Fig. 5C is a side view of the structure and operation of a wavelength-selective switch (WSS-2) according to a third embodiment;
Fig. 5D is a top face view of the structure and operation of a wavelength-selective switch (WSS-2) according to a third embodiment;
Fig. 6A is a drawing that depicts an example of usage of the wavelength-selective switch according to the third embodiment in an optical transmission system;
Fig. 6B is a drawing of an internal structure of each OADM node;
Fig. 7A is a drawing of the structure of transmission paths and a cross-connect switch (WXC);
Fig. 7B is a drawing that depicts an exemplary connection of a Hub signal;
Fig. 8A is a drawing of an exemplary arrangement of input and output ports;
Fig. 8B is a drawing of an exemplary arrangement of input and output ports;
Fig. 9A is a perspective view of the structure of a wavelength-selective switch;
Fig. 9B is a side view of the structure of the wavelength-selective switch;
Fig. 9C is a side view of a port switching operation of the wavelength-selective switch;
Fig. 9D is a side view for explaining the principle of output-light attenuation;
Fig. 9E is a drawing of positions where a reflected light beam from a movable reflector is input to a collimate lens;
Fig. 10A is a drawing of incident positions on the movable reflector;
Fig. 10B is a drawing of reflected light beams on the movable reflector;
Fig. 10C is a drawing for explaining power distribution of reflected light beams when transmission light power is at maximum;
Fig. 10D is a drawing for explaining power distribution of reflected light beams when transmission light power is attenuated;
Fig. 11A is a drawing that depicts a relation between a wavelength and a transmittance without an influence of diffraction;
Fig. 11B is a drawing that depicts a relation between a wavelength and a transmittance with an influence of diffraction;
Fig. 11C is a drawing that depicts a relation between a wavelength and a transmittance in consideration of an influence of diffraction;
Fig. 12A is a side view of a wavelength-selective switch;
Fig. 12B is a front view of the movable reflector;
Fig. 12C is a front view of the movable reflector;
Fig. 13A is a top face view of the wavelength-selective switch;
Fig. 13B is a front view of the movable reflector;
Fig. 13C is a front view of the movable reflector;
Fig. 14 is a graph that depicts an exemplary calculation of band characteristics with an angle being changed in a horizontal direction (spectroscopic direction);
Fig. 15A is a drawing that depicts calculation results for transmission light (when side lobe=0dB and one node stage);
Fig. 15B is a drawing that depicts calculation results for transmission light (when side lobe=0dB and one node stage);
Fig. 15C is a drawing that depicts calculation results for transmission light (when side lobe=0dB and 16 node stages);
Fig. 15D is a drawing that depicts calculation results for transmission light (when side lobe=1dB and one node stage);
Fig. 15E is a drawing that depicts calculation results for transmission light (when side lobe=1dB and 16 node stages);
Fig. 15F is a drawing that depicts calculation results for transmission light (when side lobe=5dB and one node stage); and
Fig. 15G is a drawing that depicts calculation results for transmission light (when side lobe=5dB and 16 node stages).

### DETAILED DESCRIPTION

Exemplary embodiments of the optical switch and the optical transmission apparatus according to the present invention are described in detail below with reference to the accompanying drawings.

In the present invention, as for a port-to-port connection for each optical transmission, a distinction is made between a port-to-port connection requiring suppression of a side lobe caused by deterioration in band characteristic (hereinafter, "connection A") and a port-to-port connection not requiring suppression of such a side lobe (hereinafter, "connection B").

As for the connection A, a MEMS mirror is rotated about an axis in a direction parallel to a spectroscopic plane of a wavelength separating element (a diffraction grating), thereby achieving an optical attenuation (VOA) function.

On the other hand, as for the connection B, a micromirror is rotated about an axis in a direction perpendicular to the spectroscopic plane of the diffraction grating, thereby achieving the VOA function.

When the VOA function in the connection A is attained, output light is leaked to another output port of an adjacent input and output optical system, thereby causing a problem of the occurrence of a cross talk and therefore limiting the number of ports. In the present invention, by applying the connection A only to a connection among a small number of ports requiring suppression of a side lobe, thereby allowing ports to be provided as many as possible. In the following first to third embodiments, specific examples of application of the connection A and the connection B depending on the purpose are described.

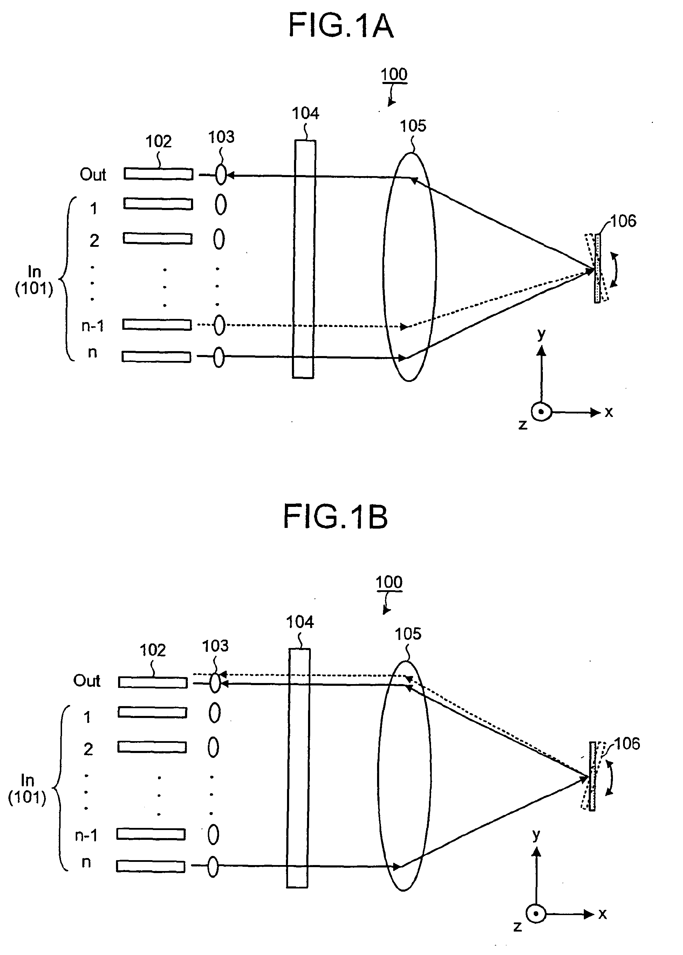

Fig. 1A is a side view of the structure of a wavelength-selective switch (WSS-1) according to the first embodiment performing port switching. A wavelength-selective switch (WSS-1) 100 includes n input ports (In-1 to In-n) 101, a single common output port (Out) 102, collimate lenses 103 each provided for an input/output opening of each port, a transmission-type diffraction grating 104 serving as a spectroscopic element, a lens 105 serving as a beam-condensing optical system, and a MEMS mirror 106 serving as a movable reflector. An array of MEMS mirrors 106 forms the movable reflector array (mirror array) 70 (refer to Fig. 9A).

In the wavelength-selective switch (WSS-1) 100, the MEMS mirror 106 is tilted with the z axis being taken as a rotation axis. Thus, as denoted as a solid line or dotted line in Fig. 1 A, any one of the input ports (In-1 to In-n) 101 can be coupled to the output port (Out) 102.

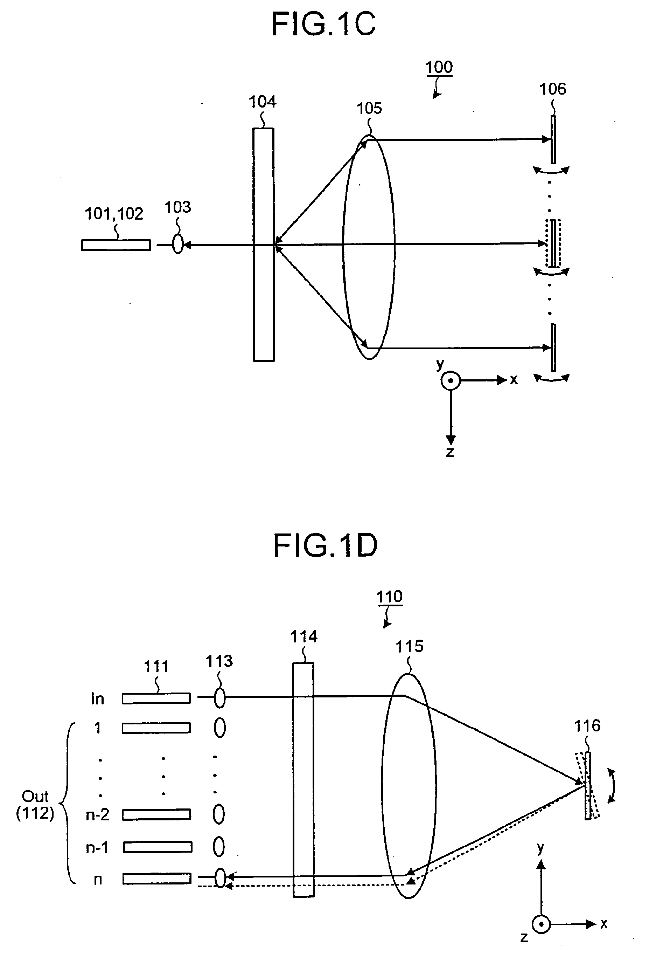

Fig. 1 B is a side view of the structure of the wavelength-selective switch (WSS-1) according to the first embodiment performing the VOA function. Fig. 1C is a top face view of the structure of the wavelength-selective switch (WSS-1) according to the first embodiment performing the VOA function.

When attenuation is made with the VOA function, the amount of rotation of the MEMS mirror 106 is adjusted to move a reflected light path as denoted as arrows (dotted lines) in the drawings to cause an axial deviation in the connection with the output port (Out) according to the intended attenuation amount. The direction of the axial deviation is assumed to be a direction in reverse to the arrangement positions of the input ports (In-1 to In-n), that is, a direction external to the output port (Out). In the case of the connection with such a coupling (connection A), the port to which the reflected light from the MEMS mirror 106 is coupled is only the output port (Out) 102. Therefore, when the switch is used for achieving VOA, light is not leaked to the input ports (In-1 to In-n). The MEMS mirror 106 of the wavelength-selective switch (WSS-1) 100 has a one-axis structure in which rotation is made about the z axis as a rotation axis.

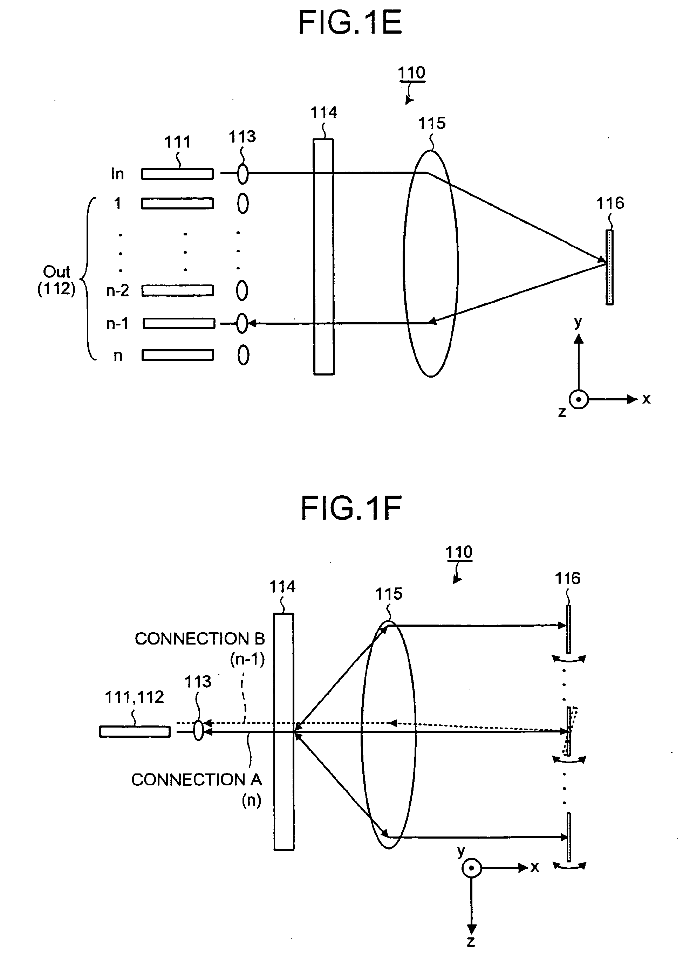

Fig. 1 D is a side view of a wavelength-selective switch (WSS-2) according to the first embodiment performing an operation (connection A), Fig. 1 E is a side view of the wavelength-selective switch (WSS-2) according to the first embodiment performing an operation (connection B), and Fig. 1 F is a side view of the wavelength-selective switch (WSS-2) according to the first embodiment performing an operation (connections A and B). A wavelength-selective switch (WSS-2) 110 includes a single common input port (In) 111, n output ports (Out-1 to Out-n) 112, collimate lenses 113, a transmission-type diffraction grating 114 serving as a spectroscopic element, a lens 115, and a MEMS mirror 116. The function of each of the components is similar to that of each of the components (101 to 105) of the wavelength-selective switch (WSS-1) except the MEMS mirror 116. In the wavelength-selective switch (WSS-2) 110, the MEMS mirror 116 is tilted with the z axis being taken as a rotation axis, thereby allowing coupling of the input port (In) 111 to any one of the output ports (Out-1 to Out-n) 112. The MEMS mirror 116 has a two-axis structure in which rotation is made about the z axis and the y axis as rotation axes.

Also, when the VOA function is achieved by the wavelength-selective switch (WSS-2) 110, the rotation axis of the MEMS mirror 116 is changed with either one of the connection A and the connection B described above. As shown in Fig. 1 D, for the connection A, that is, for the connection to the output port (n) 112 where suppression of a side lobe is desired, the MEMS mirror 116 is tilted with the z axis being taken as a rotation axis (refer to Fig. 1 F). Then, as shown in Fig. 1 E, to the output port 112 (n-1) not requiring suppression of a side lobe in the connection B, the MEMS mirror 116 is titled with the y axis being taken as a rotation axis. As such, each optical coupling is performed.

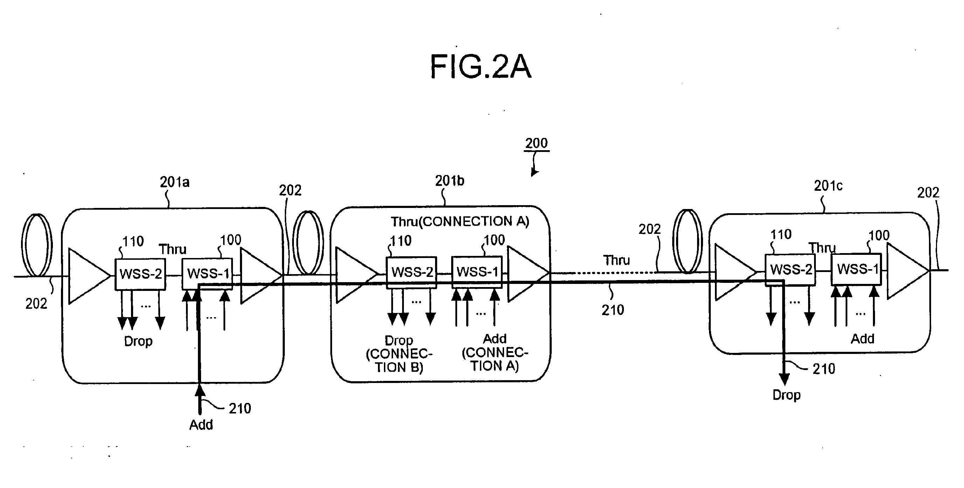

Fig. 2A is a drawing that depicts an example of usage of the wavelength-selective switch according to the first embodiment in an optical transmission system. An optical transmission system 200 includes a plurality of Optical Add Drop Multiplexing (OADM) nodes (201 a to 201 c) provided on a transmission path 202. From each of the OADM nodes (201 a to 201 c), insertion (Add) or branching (Drop) of light having an arbitrary wavelength can be performed. The wavelength-selective switch (WSS-1) 100 shown in Figs. 1 A to 1C is used for insertion (Add), while the wavelength-selective switch (WSS-2) 110 shown in Figs. 1 D to 1 F is used for branching (Drop). In the drawings, a route denoted as 210 represents a certain optical transmission pattern.

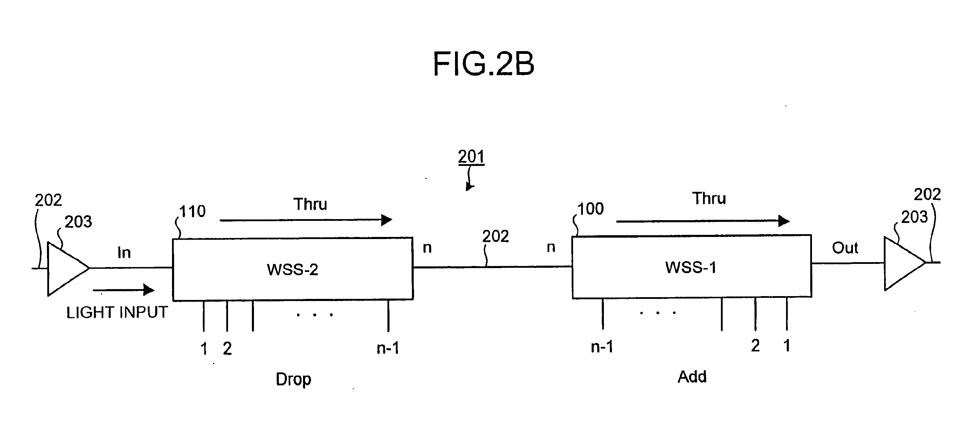

Fig. 2B is a drawing of an internal structure of each OADM node. Each of the OADM nodes (201 a to 201 c) includes the wavelength-selective switch (WSS-1) 100 for insertion (Add) of light having an arbitrary wavelength from outside, the wavelength-selective switch (WSS-2) 110 for branching (Drop) of light having an arbitrary wavelength within wavelength-multiplexed main signal light to be transmitted on the transmission path 202, and an optical amplifier 203 for the purpose of recovering the light power of the signal light attenuated on the transmission path fiber and at the wavelength-selective switches 100 and 110.

As for the signal light passing through the transmission path 202, a distinction is made, at each of the OADM nodes (201 a to 201 c), among passing main signal light (Thru signal light), insertion signal light (Add signal light) newly inserted in the main signal light, and branching signal light (Drop signal light) branching to another node or transmission path. When attention is given to the optical transmission pattern 210 shown in Fig. 2A, light is input from the OADM node 201 a as the insertion signal light (Add signal light), passes through the OADM node 201 b as the main signal light (Thru signal light), and then is output at the OADM node 201 c as the branching signal light (Drop signal light).

The insertion signal light input from outside is input from any one of the input ports (1 to n) 101 of the wavelength-selective switch (WSS-1) 100 (refer to Fig. 1 A), and is then connected to the output port (Out) 102 (connection A), thereby being added to the main signal light. The main signal light from the transmission path 202 is input to the input port (In) 111 of the wavelength-selective switch (WSS-2) 110 (refer to Fig. 1 D), and is then connected to the output port (n) 112 (connection A). The main signal light input from the wavelength-selective switch (WSS-2) 110 to the wavelength-selective switch (WSS-1) 100 is input from the input port (n) 101, and is then connected to the output port (Out) 102 (connection A), thereby being output to the transmission path 202 as the main signal light. The branching signal light output to the outside from the main signal light is connected from the input port (In) 111 of the wavelength-selective switch (WSS-2) 110 to any one of the output ports (1 to n-1) 112 (connection B), and is then output as branching signal light.

Therefore, in the case of the optical transmission pattern 210 shown in Fig. 2A, an influence of a side lobe due to deterioration in band characteristic occurs in the signal light only when the branching signal light is output from the OADM node 201c. Thus, it is possible to suppress transmission of the ASE to a minimum.

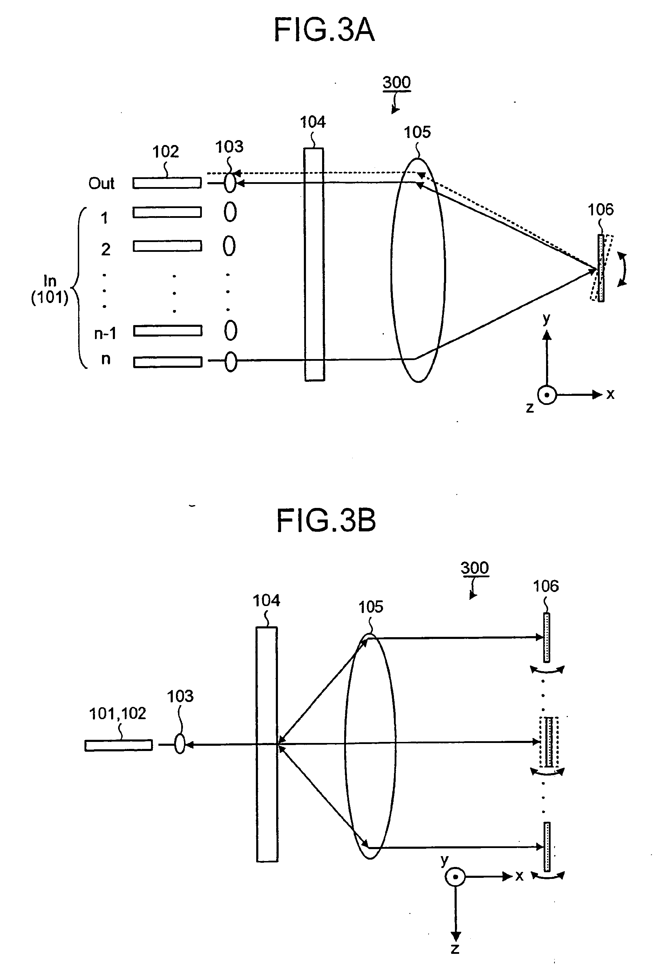

Fig. 3A is a side view of the structure and operation of a wavelength-selective switch (WSS-1) according to the second embodiment. Fig. 3B is a top face view of the structure and operation of the wavelength-selective switch (WSS-1) according to the second embodiment.

A wavelength-selective switch (WSS-1) 300 includes the n input ports (In-1 to In-n) 101, the single common output port (Out) 102, the collimate lenses 103 each provided for an input/output opening of each port, the transmission-type diffraction grating 104, the lens 105 serving as a beam-condensing optical system, and the MEMS mirror 106 serving as a movable reflector including a micromirror. The MEMS mirror 106 has a one-axis structure in which rotation is made about the z axis as a rotation axis. This wavelength-selective switch (WSS-1) 300 is identical in structure to the wavelength-selective switch (WSS-1) 100 according to the first embodiment. In the wavelength-selective switch (WSS-1) 300, the MEMS mirror 106 is tilted with the z axis being taken as a rotation axis, thereby allowing coupling of any one of the input ports (In-1 to In-n) to the output port (Out) 102.

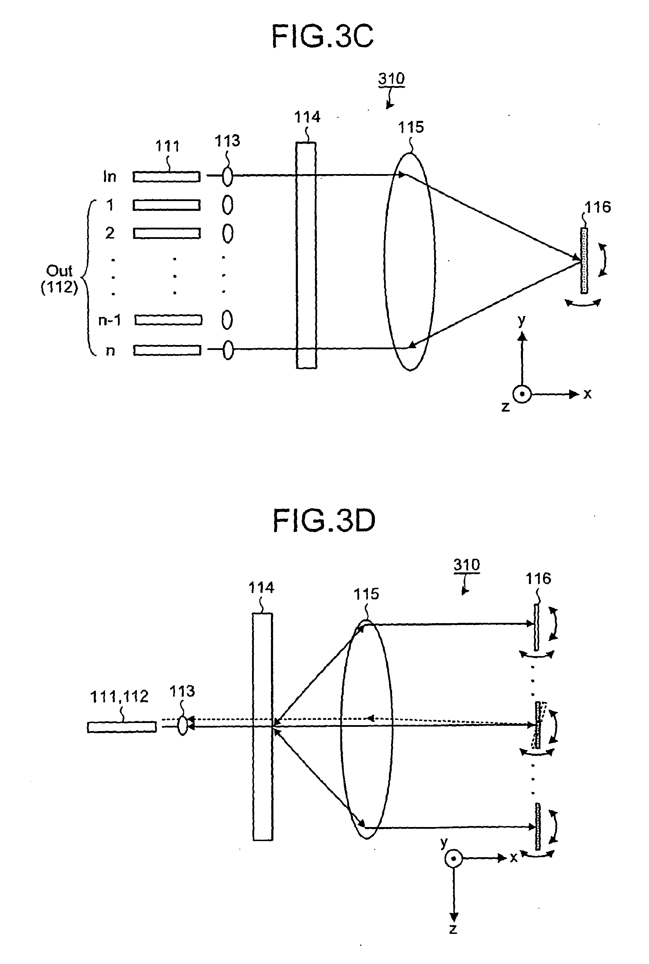

Fig. 3C is a side view of the structure and operation of a wavelength-selective switch (WSS-2) according to the second embodiment. Fig. 3D is a top face view of the structure and operation of the wavelength-selective switch (WSS-2) according to the second embodiment. A wavelength-selective switch (WSS-2) 310 includes the single common input port (In) 111, the n output ports (Out-1 to Out-n) 112, the collimate lenses 113, the transmission-type diffraction grating 114, the lens 115, and the MEMS mirror 116. Also as for this wavelength-selective switch (WSS-2) 310, the MEMS mirror 116 is tilted with the z axis being taken as a rotation axis, thereby allowing coupling of the input port (In) 111 to any one of the output ports (Out-1 to Out-n) 112. The MEMS mirror 116 has a two-axis structure in which rotation is made about the z axis and the y axis as rotation axes.

In the wavelength-selective switch (WSS-2) 310, to achieve a VOA function, the MEMS mirror 116 is tilted with the y axis being taken as a rotation axis. That is, all of the output ports (1 to n) 112 are treated as those in the connection B not requiring suppression of a side lobe.

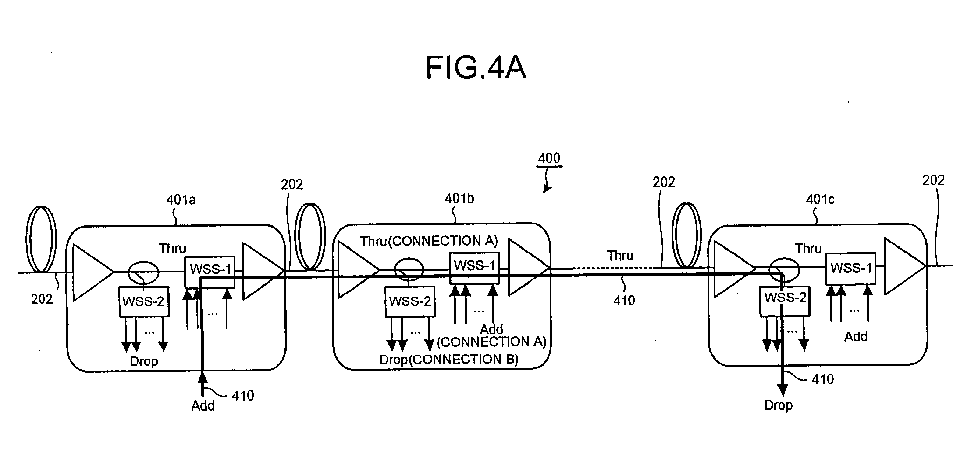

Fig. 4A is a drawing that depicts an example of usage of the wavelength-selective switch according to the second embodiment in an optical transmission system. An optical transmission system 400 includes a plurality of OADM nodes (401 a to 401 c) provided on the transmission path 202. From each of the OADM nodes (401 a to 401 c), insertion (Add) or branching (Drop) of light having an arbitrary wavelength is performed. The wavelength-selective switch (WSS-1) 300 shown in Figs. 3A and 3B is used for insertion (Add), while the wavelength-selective switch (WSS-2) 310 shown in Figs. 3C and 3D is used for branching (Drop). In the drawings, a route denoted as 410 represents a certain optical transmission pattern.

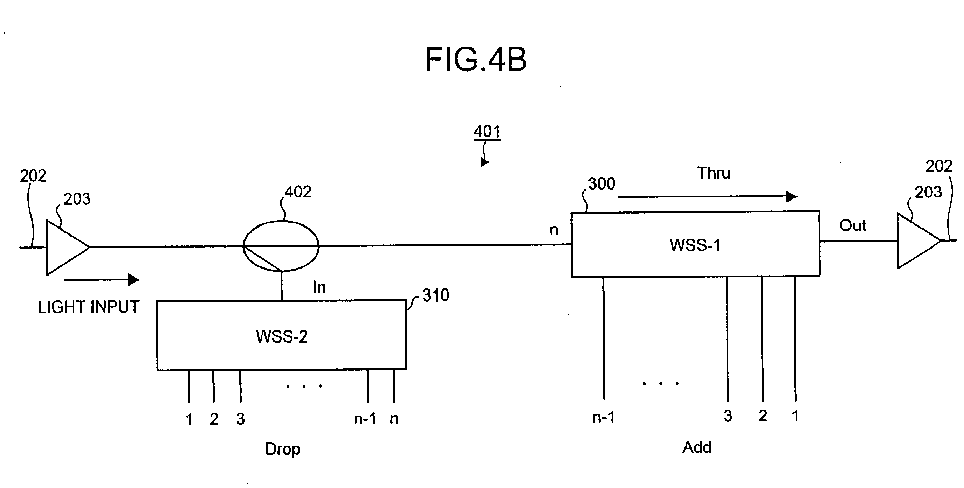

Fig. 4B is a drawing of an internal structure of each OADM node. Each of the OADM nodes (401 a to 401 c) includes the wavelength-selective switch (WSS-1) 300 for insertion (Add) of light having an arbitrary wavelength from the outside, a 1×2 optical coupler 402 that branches the wavelength-multiplexed main signal light flowing through the transmission path 202 into two, that is, passing main signal light and branching signal light, the wavelength-selective switch (WSS-2) 310 for outputting, for each arbitrary wavelength, the branching signal light to the outside or another transmission path, and the optical amplifier 203 for the purpose of recovering the gain of the signal light attenuated at the wavelength-selective switches 300 and 310.

As with the first embodiment, as for the signal light flowing through each of the OADM nodes (401 a to 401 c), a distinction is made among main signal light, insertion signal light, and branching signal light. A connection of the insertion signal light to the main signal light is similar to that according to the first embodiment (connection A), and therefore its description is omitted. The main signal light is allowed to pass in a manner such that the main signal light input from the transmission path 202 is first branched by the 1 ×2 optical coupler 402, with one light being taken as main signal light to be input to the input port (n) 101 of the wavelength-selective switch (WSS-1) 300 and then be connected to the output port (Out) 102 for output to the transmission path 202. The other signal light obtained by branching of the 1 ×2 optical coupler 402 is input as branching signal light to the input port (In) of the wavelength-selective switch (WSS-2) 310, and is then connected to any one of the output ports (1 to n), thereby being output as branching signal light to the outside or another transmission path.

Therefore, when attention is given to the optical transmission pattern 410 shown in Fig. 4A, an influence of a side lobe due to deterioration in band characteristic occurs in the signal light only when the branching signal light is output from the OADM node 401 c. Thus, it is possible to suppress transmission of the ASE to a minimum.

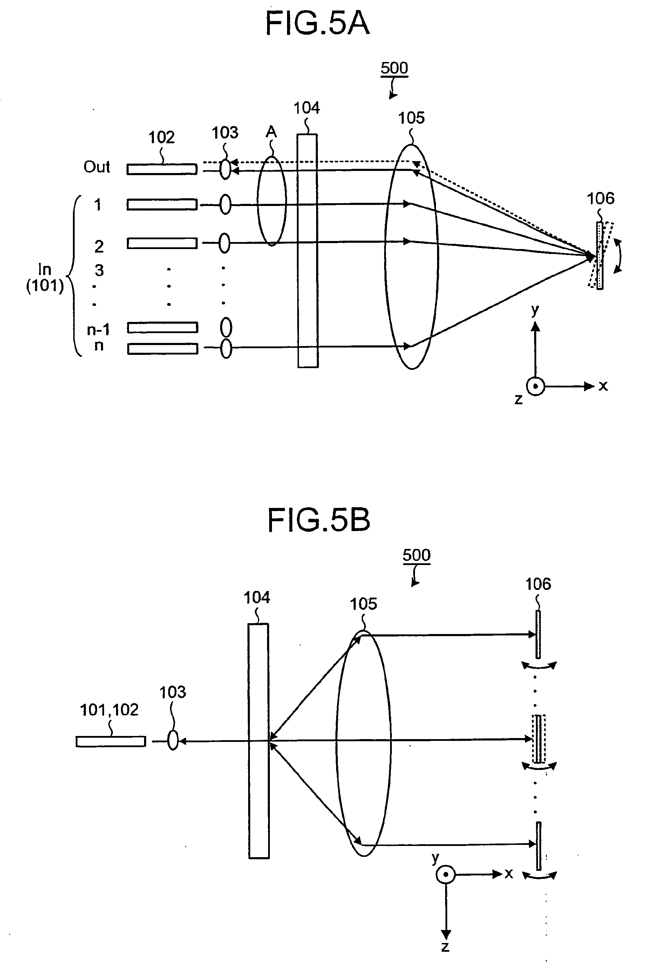

Fig. 5A is a side view of the structure and operation of a wavelength-selective switch (WSS-1) according to the third embodiment. Fig. 3B is a top face view of the structure and operation of the wavelength-selective switch (WSS-1) according to the third embodiment. A wavelength-selective switch (WSS-1) 500 includes the n input ports (1 to n) 101, the single common output port (Out) 102, the collimate lenses 103 each provided for an input/output opening of each port, the transmission-type diffraction grating 104 serving as a spectroscopic element, the lens 105 serving as a beam-condensing optical system, and the MEMS mirror 106 serving as a movable reflector including a micromirror.

Compared with the wavelength-selective switches (WSS-1) 100 and 300 shown in the first and second embodiments, in the wavelength-selective switch (WSS-1) 500, port spacing from the input ports 1 and 2 to the output port Out (a portion denoted as A in the drawing) is wider than spacing among the other ports (Out 3 to n). With this, even when a VOA function is achieved by tilting the MEMS mirror 106 with respect to the port 1 and the port 2 with the z axis being taken as a rotation axis, there is no possibility of light leakage to another adjacent port. Thus, by tilting the MEMS mirror 106 with the z axis being taken as a rotation axis for optical coupling, the signal light input from any one of the input ports (1 to n) 101 achieves a connection (connection A).

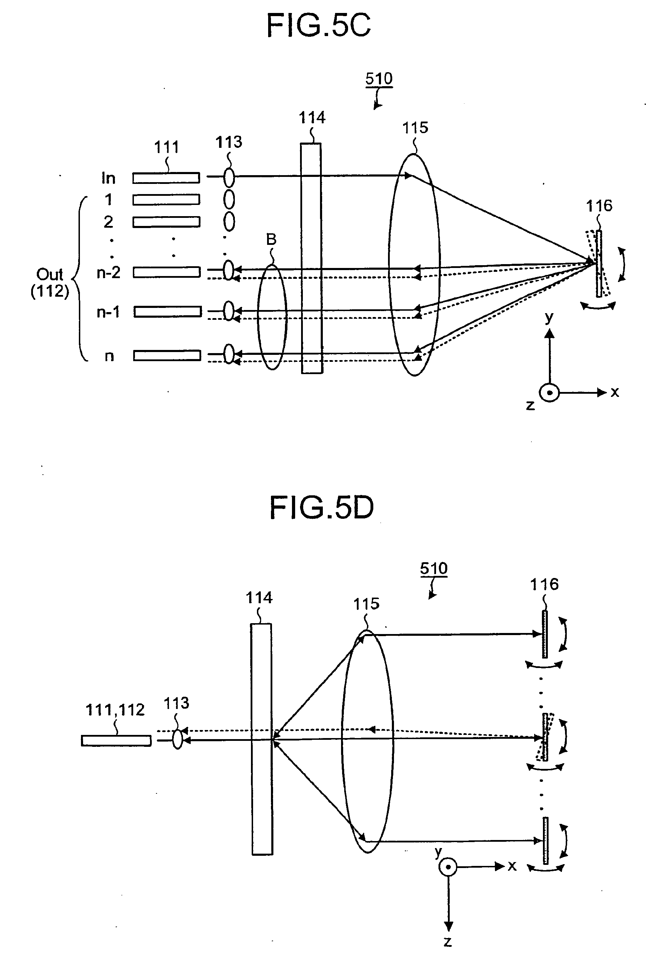

Fig. 5C is a side view of a wavelength-selective switch (WSS-2) according to the third embodiment. Fig. 5D is a top face view of the wavelength-selective switch (WSS-2) according to the third embodiment. A wavelength-selective switch (WSS-2) 510 includes the single common input port (In) 111, the n output ports (1 to n) 112, the collimate lenses 113 provided for an input/output opening of each port, the transmission-type diffraction grating 114, the lens 115 serving as a beam-condensing optical system, and the MEMS mirror 116 serving as a movable reflector including a micromirror.

For coupling from the input port (In) 111 to any one of the output ports (1 to n) 112, the wavelength-selective switch (WSS-2) 510 performs a connection for three ports of n-2, n-1, and n by taking the z axis as a rotation axis (connection A), while performing a connection for the other ports (1 to n-3 (one stage above n-2, but not shown in the drawing)) by taking the y axis as a rotation axis (connection B). The MEMS mirror 116 has a two-axis structure in which rotation is made about the z axis and the y axis as rotation axes. Of the output ports 112, three ports of n-2, n-1, and n are spaced apart (a portion denoted as B in the drawing) more widely. Therefore, even when a VOA function is achieved by tilting the MEMS mirror 116 with the z axis being taken as a rotation axis, there is no possibility of light leakage to another adjacent port.

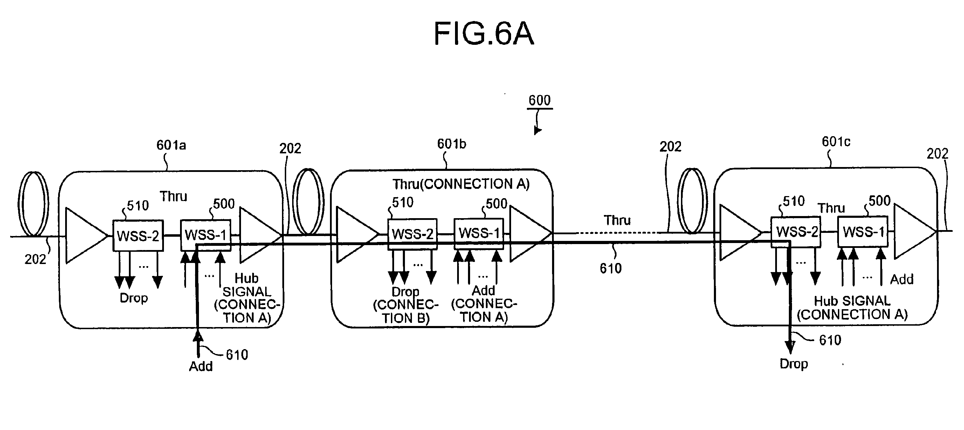

Fig. 6A is a drawing that depicts an example of usage of the wavelength-selective switch according to the third embodiment in an optical transmission system. An optical transmission system 600 includes a plurality of OADM nodes (601 a to 601 c) provided on the transmission path 202. From each of the OADM nodes (601 a to 601 c), insertion (Add) or branching (Drop) of light having an arbitrary wavelength is performed. The wavelength-selective switch (WSS-1) 500 shown in Figs. 5A and 5B is used for insertion, while the wavelength-selective switch (WSS-2) 510 shown in Figs. 5C and 5D is used for branching. In the drawings, a route denoted as 610 represents a certain optical transmission pattern.

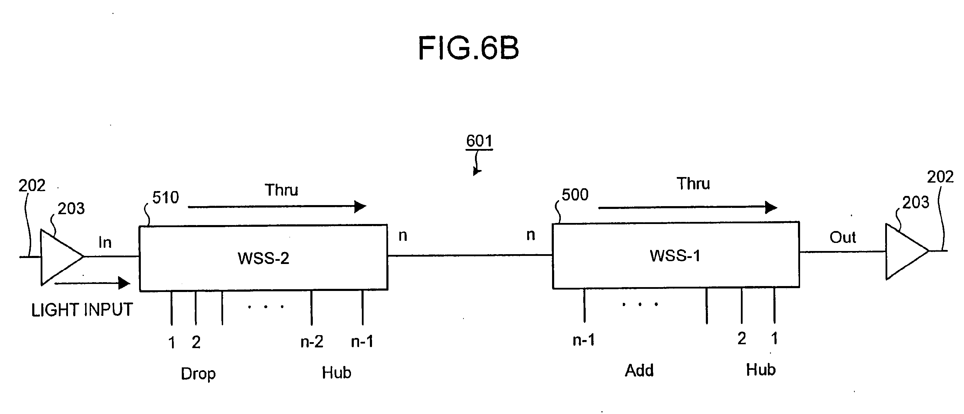

Fig. 6B is a drawing of an internal structure of each OADM node. Each of the OADM nodes (601 a to 601 c) includes the wavelength-selective switch (WSS-1) 500 for insertion (Add) of light having an arbitrary wavelength from the outside, the wavelength-selective switch (WSS-2) 510 for branching (Drop) of light having an arbitrary wavelength within the wavelength-multiplexed main signal light flowing through the transmission path 202 , and the optical amplifier 203 for the purpose of recovering the gain of the signal light attenuated at the wavelength-selective switches 500 and 510.

In the first and second embodiments, the branching signals to the outside are uniformly treated as branching signal light, and the insertion signals from the outside are uniformly treated as insertion signal light. However, the optical transmission system 600 is set such that, of the insertion signal light and the branching signal light, a signal connected to another OADM node is taken as a Hub signal for connection among fixed ports. In the wavelength-selective switch (WSS-1) 500, the input ports (1, 2) 101 (refer to Fig. 5A) are used as ports for insertion of the main signal light. In the wavelength-selective switch (WSS-2) 510, the output ports (n-1, n-2) 112 (refer to Fig. 5B) are used as ports for branching of the main signal light.

The main signal light is allowed to pass in a manner such that the signal light from the transmission path 202 is input to the input port (In) 111 of the wavelength-selective switch (WSS-2) 510 and is then connected to the output port (n) 101 (connection A), and the output main signal light is input to the input port (n) 101 of the wavelength-selective switch (WSS-1) 500 and is then connected to the output port (Out) 102 (connection A) for output to the transmission path 202. Also, since all connections are made with the connection A, an influence of a side lobe due to deterioration in band characteristic can be prevented.

The insertion signal light is connected (connection A) to the output port (Out) 102 from any one of the input ports (In-1, In-2) of the wavelength-selective switch (WSS-1) 500 (refer to Fig. 5A) when the light is inserted as a Hub signal, and from any one of the input ports (3 to n-1) of the wavelength-selective switch (WSS-1) 500 when the light is inserted as another signal, and is then output to the transmission path 202.

When the branching signal light is branched as a Hub signal, the branching signal light is connected from the input port (in) 111 (refer to Fig. 5C) of the wavelength-selective switch (WSS-2) 510 to any one of the output ports (n-2, n-1) 112 of the wavelength-selective switch (WSS-2) 510 (connection A), and is then output to another OADM node. When the branching signal light is branched as another signal, the branching signal light is connected to any one of the output ports (1 to n-3) 102 (connection B), and is then output to the outside.

From the description above, when attention is given to the optical transmission pattern 610 shown in Fig. 6A, the light is inserted as a Hub signal, transmitted as the main signal, and is then branched as a Hub signal. Therefore, transmission can be performed without an influence due to a side lobe. A specific exemplary connection with another OADM node with the light being taken as a Hub signal is described below.

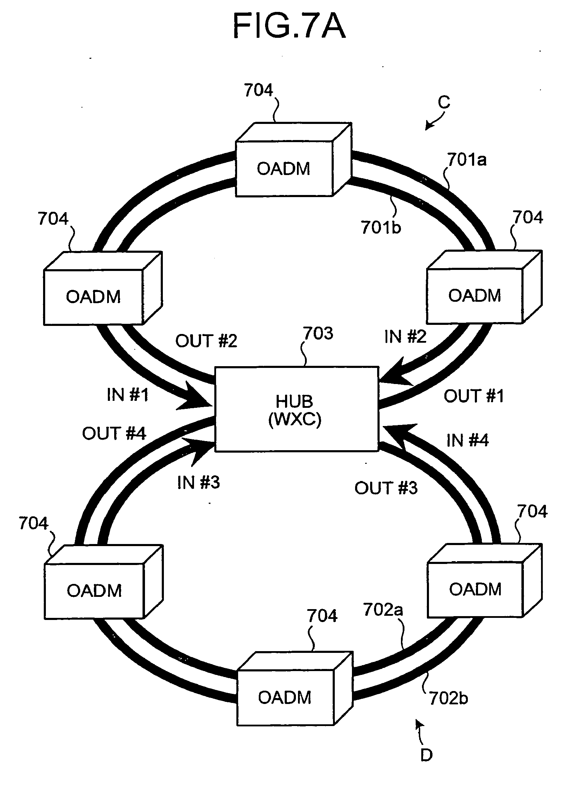

Fig. 7A is a drawing of the structure of transmission paths and a cross-connect switch (WXC). A cross-connect switch (WXC) 703, which is similar in structure to the OADM nodes 601 (refer to Figs. 6A, 6B), is connected to two ring transmission paths (C, D). The transmission path C includes two systems of optical fibers 701 a and 701 b. The transmission path D includes two systems of optical fibers 702a and 702b. The transmission paths C and D are each provided with OADM nodes 704.

The optical fiber 701 a and the optical fiber 702a generally serve as a current circuit for transmission in one direction. When a failure occurs in the optical fibers 701 a and 702a of the current circuits, transmission is performed by using the optical fibers 701 b and 702b provided as backup circuits. Then, the WXC 703 performs switching of the signal light on a path #1, a path #2, a path #3, and a path #4 of the transmission paths C and D.

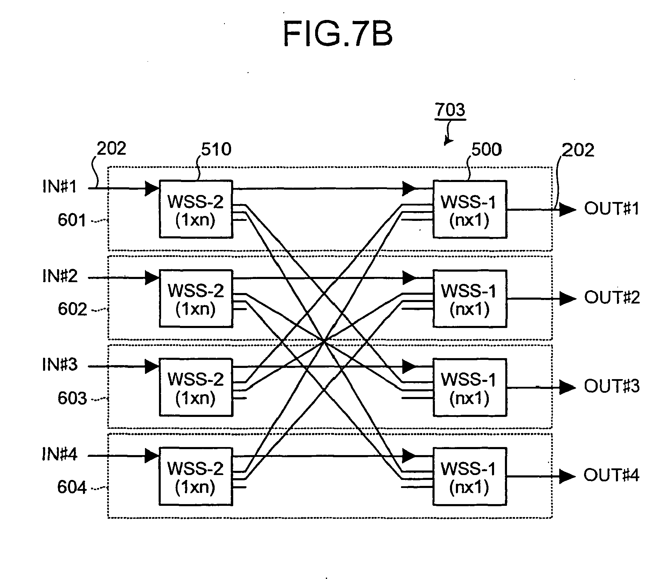

Fig. 7B is a drawing that depicts an exemplary connection of a Hub signal. The WXC 703 is formed by using the wavelength-selective switch (WSS-1) 500 and the wavelength-selective switch (WSS-2) 510 provided to the OADM node 601. A pair of the wavelength-selective switch (WSS-1) 500 and the wavelength-selective switch (WSS-2) 510 each form switches 601 to 604 of the paths #1 to #4. Also, in the switch 601, the Hub-signal ports (n-2, n-1) 112 of the wavelength-selective switch (WSS-2) 510 (refer to Fig. 5C) are connected to the Hub-signal ports (1, 2) 101 (refer to Fig. 5A) of the wavelength-selective switch (WSS-1) 500 for other switches 603 and 604 (connection A). Similarly, cross connection is performed among other switches 602 to 604. With this, by using the WXC 703, path switching can be performed between the transmission path C and the transmission path D.

In the connection between the wavelength-selective switch (WSS-1) 500 and the wavelength-selective switch (WSS-2) 510 inside of this WXC 703, a port for path switching has a structure of the connection A. With this, it is possible to form the cross-connect switch 703 for the Thru signal and the Hub signal with an influence of a side lobe being suppressed.

In the wavelength-selective switch (WSS-1) 500 according to the third embodiment (refer to Fig. 5A), the port spacing of the portion denoted as A in the drawing is set widely. However, the same effect can be achieved even with a structure similar to that of the wavelength-selective switch (WSS-1) 100 according to the first embodiment (refer to Fig. 1A). Also, the wavelength-selective switch (WSS-2) 510 according to the third embodiment (refer to Fig. 5C), port spacing of the portion denoted as B shown in the drawing within the n output ports (1 to n) is set widely. However, if there is a sufficient width for arrangement of all ports, the number of ports whose port spacing is set widely is increased, thereby allowing the A connection to be achieved also for the branching signal light as well as the Hub signal.

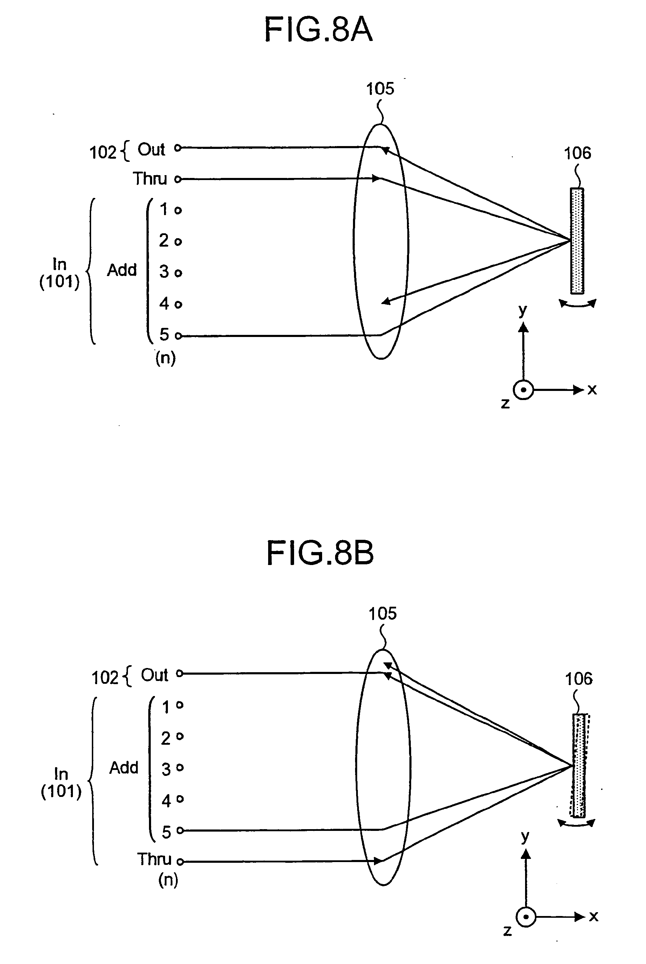

Figs. 8A and 8B are drawings of exemplary arrangements of input and output ports.

For example, as shown in Fig. 8A, when the input port (Thru) 101 and the output port (Out) 102 of the main signal light are arranged at port positions adjacent to each other, the input main signal light is leaked in a direction of the input port (4) 102 due to an influence of the insertion signal light from the input port (5) to the output port (Out) 102, thereby causing an adverse effect due to mixing of light to another port.

Therefore, as shown in Fig. 8B, with the input port (Thru) 101 of the main signal light and the output port (Out) 102 being arranged to be farthest distanced away from each other, the main signal light from the input port (Thru) 101 is cut off by the insertion signal light from the input port (5) 101, thereby preventing a leakage to other input ports (1 to 4) 101 and allowing the main signal light to pass most effectively. In all of the wavelength-selective switches (WSS-1) for Add in the first to third embodiments, of the n input ports (In) 101, one port (Thru) for allowing the main signal light to pass is disposed at a port position farthest distanced away from the single common output port (Out) 102.

As has been described above, connections are treated by making a distinction between a connection where suppression of an influence of a side lobe due to deterioration in band characteristic is desired and a connection without requiring suppression of an influence of a side lobe due to deterioration in band characteristic. With this, the wavelength-selective switch according to the present invention can suppress deterioration in signal light that can possibly occur in signal light transmission for each port from insertion (Add) to branching (Drop) of the signal light.

Also, according to the wavelength-selective switch capable of performing perform optical attenuation and the cross-connect switch using such a wavelength-selective switch of the present invention, optical amplification can be performed by an optical amplifier without deterioration of the S/N ratio. This makes it possible to achieve multi-stage connection and construct a highly-flexible optical system. Particularly, as for the main signal light of the Hub signal treated as a main signal, all influences of a side lobe due to deterioration in band characteristic can be suppressed.

According to the optical switch and the optical transmission apparatus, an effect can be achieved such that an influence of deterioration in band characteristic caused by an operation of a VOA function can be suppressed.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An optical switch comprising:
an input port from which beam is input;
a dispersing unit that disperses the beam input;
a condensing unit that condenses the beam dispersed;
a mirror that reflects the beam condensed; and
a plurality of output ports from which the beam reflected is output, wherein
the mirror rotates around a first axis so that the beam reflected enters one of the output ports, and also rotates around an axis that is selected, according to that which output port the beam reflected enters, from any one of the first axis and a second axis perpendicular to the first axis so that an intensity of the beam output is attenuated.

2. An optical switch comprising:
a plurality of input ports from which beam is input;
a dispersing unit that disperses the beam input;
a condensing unit that condenses the beam dispersed;
a mirror that reflects the beam condensed; and
an output port from which the beam reflected is output, wherein
the mirror rotates around a first axis so that the beam reflected enters the output port, and also rotates around an axis that is selected, according to that from which input port the beam is input, from any one of the first axis and a second axis perpendicular to the first axis so that an intensity of the beam output is attenuated.

3. An optical transmission apparatus that branches beam input from a transmission path, comprising:
an input port from which the beam is input;
a dispersing unit that disperses the beam input;
a condensing unit that condenses the beam dispersed;
a mirror that reflects the beam condensed; and
a plurality of output ports from which the beam reflected is output, wherein
the mirror rotates around a first axis so that the beam reflected enters one of the output ports, and also rotates around an axis that is selected, according to that which output port the beam reflected enters, from any one of the first axis and a second axis perpendicular to the first axis so that an intensity of the beam output is attenuated.

4. The optical transmission apparatus according to claim 3, wherein
the input port and the output ports are arranged in a line along a direction perpendicular to a dispersion direction in which the beam is dispersed, and
a space between the output ports in an end of the line is wider than that of the output ports in other part of the line.

5. The optical transmission apparatus according to claim 3, wherein
the input port and the output ports are arranged in a line along a direction perpendicular to a dispersion direction in which the beam is dispersed, and
an output port at the end of the line is connected to the transmission path.

6. The optical transmission apparatus according to claim 5, wherein any one of the input port and the output ports is for connecting a cross connect hub.

7. An optical transmission apparatus that adds beam to another beam going through a transmission path, comprising:
a plurality of input ports from which the beam is input;
a dispersing unit that disperses the beam input;
a condensing unit that condenses the beam dispersed;
a mirror that reflects the beam condensed; and
an output port from which the beam reflected is output, wherein
the mirror rotates around a first axis so that the beam reflected enters the output port, and also rotates around an axis that is selected, according to that from which input port the beam is input, from any one of the first axis and a second axis perpendicular to the first axis so that an intensity of the beam output is attenuated.

8. The optical transmission apparatus according to claim 7, wherein
the input ports and the output port are arranged in a line along a direction perpendicular to a dispersion direction in which the beam is dispersed, and
an input port at the end of the line is connected to the transmission path.

9. The optical transmission apparatus according to claim 8, wherein any one of the input ports and the output port is for connecting a cross connect hub.
